# EUROPEAN PATENT SPECIFICATION

(11) **EP 0 874 768 B1**
(45) Date of publication and mention of the grant of the patent: **18.09.2002**
(21) Application number: 96935609.6
(22) Date of filing: 23.10.1996
(51) Int. Cl.: B65D 85/57, G11B 33/04

(54) **STORING SYSTEM FOR COMPACT DISCS**
AUFBEWAHRUNGSSYSTEM FÜR COMPACT-DISCS
SYSTEME DE RANGEMENT POUR DES DISQUES COMPACTS

(30) Priority: 23.10.1995 NO 954241
(43) Date of publication of application: 04.11.1998
(73) Proprietor: Stiansen, Dag S., 0260 Oslo (NO); Stangeby-Hansen, Henrik, 0260 Oslo (NO)
(72) Inventor: STANGEBYE-HANSEN, Henrik, N-0367 Oslo (NO)
(74) Representative: Bjelkstam, Peter
(86) International application number: PCT/NO96/00248
(87) International publication number: WO 97/015511

(56) References cited:
- EP-A- 0 280 129
- WO-A-92/22902
- US-A- 4 648 514
- US-A- 5 292 010

## Description

The present invention is related to a storing system for compact discs (CD).

A plurality of suggested systems is available on the market for storing of compact discs. Such systems being adapted for storing discs vertically in such a way that the user is looking down to the edge face of the disc comprising the title field or the user is looking horizontally with the discs standing vertically in a book shelf like position. Furthermore the discs may be stored horizontally in a stack like manner.

Most commonly the storing systems are provided with partitions or slot, each accommodating one disc. Such partitions, however, utilizes part of the space, leaving less space for storing discs. When storing discs by horizontal displacement the user will be able to read the text on the edge face of the discs, the discs thereby being arranged horizontally or vertically. In all such embodiments the partitions occupy part the total system volume, the systems additionally very often being build into box - like houses.

Another prior art system is disclosed in WO-A-92/22902. This system consists of a clip adapted to be secured to the back of each compact disk box. Each clip is provided with an opening allowing the compact disk boxes to be arranged in a vertical stack along a vertically placed rod which protrudes through the opening in the clips. This system does not require space owing to partitions. However, the diameter of the opening in the clip has to be adapted to the diameter of the rod since otherwise the boxes cannot be neatly stacked.

With the storing system according to the present invention, however, a system is provided for optional storing according the needs of the individual user. Partitions, slots or the like between the discs are avoided, thereby utilizing the total volume almost entirely for storing discs.

The above advantages are achieved with the storing system according to the present invention as defined by the features stated in claims.

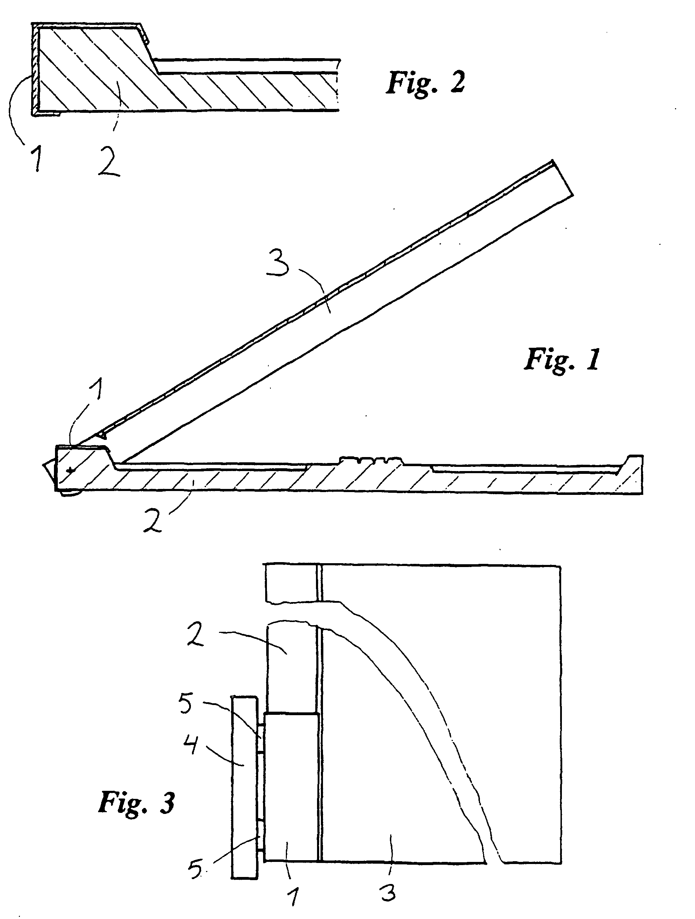

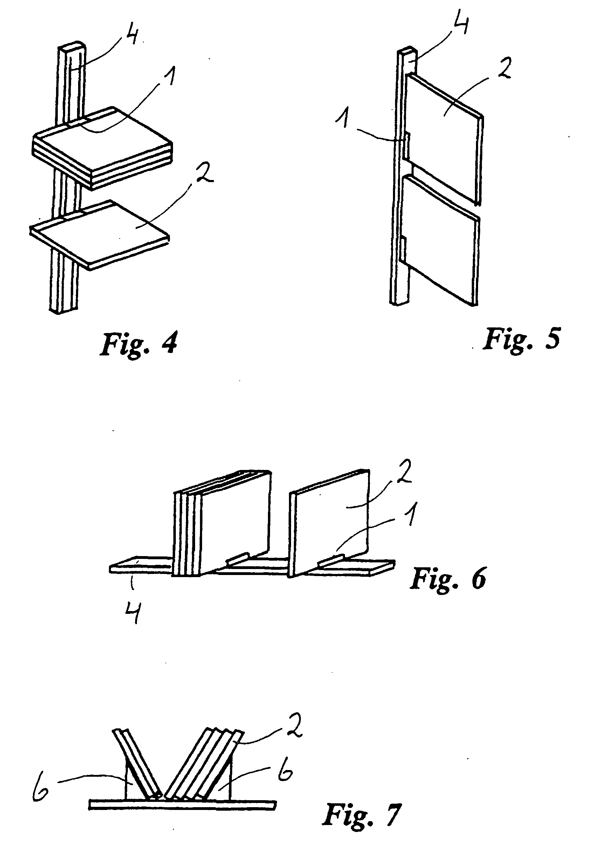

In the drawing figure 1 discloses a vertical section through a compact disc having a metal clips secured, figure 2 discloses an enlarged portion of figure 1 disclosing the cross section shape of the clips, figure 3 discloses a side view of part of a disc secured to a magnet bar arranged horizontally on a wall, figure 4 discloses in a perspective view compact discs secured horizontally to a vertical magnet bar on a wall, figure 5 discloses in a perspective view two compact discs secured vertically to a vertical magnet bar on a wall, figure 6 discloses in a perspective view compact discs arranged vertically to a horizontal magnet bar on a horizontal surface, and figure 7 discloses in a side view compact discs secured to a magnet bar arranged on a horizontal surface, adapted tiltable from one side to the other, thereby enabling a user to read the front covers individually.

A metal clip 1 is shaped to conform with the hinge portion of a standard compact disc, comprising two flanges, one of which being adapted to grip the inclined surface of the disc box 2 towards the disc position, the other flange being adapted to grip the underside of the disc box 2. The rear face of the clip 1 being flat and lying flat against the back face of the box 2. The thickness of the clip sheet being such that opening and closing of the box cover 3 is possible utilizing the slot between the box 2 and the cover 3.

The clip 1 being biased by the two flanges upon installation. The clip may be snapped in place at any place along the back of the box 2, depending of the desired use.

The flat faces of the clip 1, namely the back face and the flat front face, may be utilized for prize tag, logo etc or other informations. Utilizing the clip 1 for the prize tag avoids the usual tag on the box 2 or the cover 3.

With a clip 1 secured to a compact disc box, the box easily may be secured to a magnet bar 4 comprising at least one magnet list 5.

As disclosed in figure 4 a magnet bar 4 may be secured vertically to a wall thereby enabling securement of disc boxes horizontally above and below each other.

Figure 5 discloses how disc boxes 2 may display the front cover of the box when each box is secured vertically to a vertical magnet bar 4.

As can be seen from figure 6, the magnet bar 4 may be arranged on a horizonal surface. Disc boxes 2 may be secured vertically on and transversally to the bar 4.

The disc boxes 2 may be secured any where on the magnet bar 4, spaced apart or side by side. A desired disc box 2 easily may be taken out of the line by tilting the box 2 by pressing the outer edge of the box 2 against the magnet bar 4, thereby gripping the free part of the box.

Figure 7 discloses schematically how boxes 2 may be secured to a magnet bar 4, utilizing a wedge like stopper 6 on each side. For this purpose each disc box may be provided with one clip 1 at each end, using two connected magnet bars 4.

## Claims

1. Storing system for compact discs, having at least one clip (1) adapted to be secured to the back of each compact disc box (2), each clip
(1) having a flange gripping the underside of the disc box, the clip (1) extending along the back face and the front face of the box comprising the box hinge portion, to a second flange extending into the box (2) between the box (2) and the box cover (3), the clip (1) thereby being biased and clamped to the box by the flanges and the two plane faces; **characterized in that** the clip is made of sheet metal, the system further comprising a magnet bar (4) to which the compact disc box (2) easily may be secured by means of the metal clip (1).

2. System according to claim 1, **CHARACTERIZED BY** each metal bar (4) comprising at least one magnet list (5) adapted to hold the box (2).

3. System according to claim 1 or 2, **CHARACTERIZED BY** the metal bar (4) being adapted to be secured vertically or horizontally to a wall or another vertical surface.

4. System according to claims 1 or 2, **CHARACTERIZED BY** the metal bar (4) being adapted to be secured to or rest on a horizontal surface.

5. System according to claim 4, **CHARACTERIZED BY** one wedge like stopper (6) being arranged at either side of the compact boxes (2) on a magnet bar (4) thereby enabling tilting of the boxes individually, disclosing the front cover to a user.

6. System according to claim 5, **CHARACTERIZED BY** each compact disc box (2) being provided with two clips (1), each clip (1) securing the box (2) to one magnet bar (4), the two magnet bars (4) thereby being connected with each other.

## Patentansprüche

1. Ablagesystem für Kompakt-Disks (CDs), mit wenigstens einer Klammer (1), die für eine Befestigung an dem Rücken jeder CD-Hülle (2) angepasst ist, wobei jede Klammer (1) einen Flansch aufweist, der an der unteren Seite der CD-Hülle greift, und die Klammer (1) entlang der Rückseite und der Vorderseite der Hülle verläuft, welche den Scharnierbereich der Hülle aufweist, hin zu einem zweiten Flansch, der in die Hülle (2) zwischen der Hülle (2) und dem Deckel (3) der Hülle verläuft, sodass dadurch die Klammer (1) vorgespannt und an der Hülle durch die Flansche und die beiden planen Seiten festgeklemmt wird, **dadurch gekennzeichnet, dass** die Klammer aus Blech besteht und das System weiterhin einen Magnetstab (4) aufweist, an welchem die CD-Hülle (2) mittels der Metallklammer (1) leicht befestigt werden kann.

2. System nach Anspruch 1, **dadurch gekennzeichnet, dass** jeder Metallstab (4) wenigstens eine Magnetleiste (5) aufweist, die zum Halten der Hülle (2) angepasst ist.

3. System nach Anspruch 1 oder 2, **dadurch gekennzeichnet, dass** der Metallstab (4) für eine vertikale oder eine horizontale Befestigung an einer Wand oder an einer anderen vertikalen Fläche angepasst ist.

4. System nach Anspruch 1 oder 2, **dadurch gekennzeichnet, dass** der Metallstab (4) für eine Befestigung oder eine Auflage an einer horizontalen Fläche angepasst ist.

5. System nach Anspruch 4, **gekennzeichnet durch** einen keilähnlichen Anschlag (6), der an jeder Seite der CD-Hüllen (2) an einem Magnetstab (4) angeordnet ist, wodurch ein einzelnes Schrägstellen der Hüllen möglich ist, sodass der vordere Deckel einem Benutzer dargeboten wird.

6. System nach Anspruch 5, **dadurch gekennzeichnet, dass** jede CD-Hülle (2) mit zwei Klammern (1) versehen ist, wobei jede Klammer (1) die Hülle (2) an einem Magnetstab (4) festlegt und die beiden Magnetstäbe (4) dadurch miteinander verbunden werden.

## Revendications

1. Système de stockage pour des disques compacts, ayant au moins une pince (1) conçue pour être fixée au dos de chaque boîte (2) de disque compact, chaque pince (1) ayant un rebord serrant le côté inférieur de la boîte de disque, la pince (1) s'étendant le long de la face arrière et de la face avant de la boîte comportant la partie formant charnière de boîte, jusqu'à un second rebord s'étendant dans la boîte (2) entre la boîte (2) et le capot (3) de boîte, la pince (1) étant ainsi sollicitée et serrée contre la boîte par les rebords et les deux faces planes ; **caractérisé en ce que** la pince est réalisée en métal de feuille, le système comportant en outre une barre (4) magnétique à laquelle la boîte (2) de disque compact peut être facilement fixé au moyen de la pince (1) métallique.

2. Système suivant la revendication 1, **caractérisé en ce que** chaque barre (4) métallique comporte au moins une barre (5) d'appui magnétique conçue pour tenir la boîte (2).

3. Système suivant la revendication 1 ou 2, **caractérisé en ce que** la barre (4) métallique est conçue pour être fixée verticalement ou horizontalement à une paroi ou à une autre surface verticale.

4. Système suivant la revendication 1 ou 2, **caractérisé en ce que** la barre (4) métallique est conçue pour être fixée à une surface horizontale ou reposer sur une surface horizontale.

5. Système suivant la revendication 4, **caractérisé en ce qu'**une butée (6) en forme de coin est disposée de part et d'autre des boîtes (2) compacte sur une barre (4) magnétique pour ainsi permettre le basculement des boîtes individuellement, pour découvrir le capot avant à un utilisateur.

6. Système suivant la revendication 5, **caractérisé en ce que** chaque boîte (2) de disque compact est muni de deux pinces (1), chaque pince (1) fixant la boîte (2) à une barre (4) magnétique, les deux barres (4) magnétiques étant ainsi connectées l'une à l'autre.
